# EUROPEAN PATENT APPLICATION

(11) **EP 3 454 547 A1**
(43) Date of publication of application: **13.03.2019**
(21) Application number: 18192880.5
(22) Date of filing: 06.09.2018
(51) Int. Cl.: H04N 5/235

(54) **IMAGING APPARATUS, IMAGE PROCESSING APPARATUS, IMAGING METHOD, IMAGE PROCESSING METHOD, AND STORAGE MEDIUM**

(30) Priority: 11.09.2017 JP 2017174365; 17.05.2018 JP 2018095659
(71) Applicant: CANON KABUSHIKI KAISHA, Ohta-ku Tokyo 146-8501 (JP)
(72) Inventor: ONO, Mitsuhiro, Ohta-ku, Tokyo 146-8501 (JP); URANO, Moemi, Ohta-ku, Tokyo 146-8501 (JP)
(74) Representative: Houle, Timothy James

(57) **Abstract**

Settings desired by a user may be difficult when the user specifies an area (photometry area) for setting exposure for a combined image acquired through wide dynamic range (WDR) imaging. When a plurality of images is combined and output as a combined image, an imaging apparatus acquires information indicating a plurality of areas in the combined image having input and output characteristics different from each other together with the combined image, allows a user to set a detection area based on the acquired information, acquires an exposure parameter based on the setting, and executes imaging operation.

## Description

### BACKGROUND

### Field

The present invention relates to a technique for adjusting an imaging parameter (exposure) of a captured image acquired by combining a plurality of images.

### Description of the Related Art

In recent years, a monitoring system including network cameras has been widely used. The network camera has been used as a monitoring camera installed in a wide range of fields such as a large-scale public facility and a mass retailer. Therefore, there has been a demand for expanding a dynamic range thereof for an environment having a large illuminance difference such as an environment including both indoors and outdoors and an environment having different lighting conditions. A technique for expanding the dynamic range by combining a plurality of images captured in different exposure conditions (hereinafter, referred to as wide dynamic range (WDR) imaging) is discussed in Japanese Patent No. 3546853.

Meanwhile, there is an imaging apparatus having an automatic exposure control function for automatically determining exposure based on image data acquired through imaging operation. For example, as a photometry method used for executing automatic exposure control, there is a photometry method of controlling luminance information of pixels of an entire screen as photometry information, and a multi-division photometry method of dividing a photometry area in a screen into multiple blocks and executing photometry of each of the blocks. Further, as another photometry method, there is a center-weighted photometry method of executing photometry by placing weight on a central portion of a screen, and a spot photometry method of executing photometry of only an arbitrary range of the central portion of the screen.

In a technique discussed in Japanese Patent Application Laid-Open No. 8-279958, a main object is specified and an exposure state of a specified area is detected, and the exposure state is controlled according to a detected signal, and a range to which image correction is applied is limited while the range in which the exposure state is controlled is restricted.

However, in a combined image acquired through the WDR imaging, it may be difficult for a user to set desired exposure when the user specifies an area (photometry area) for setting exposure.

### SUMMARY OF THE INVENTION

According to a first aspect of the present invention, there is provided an imaging apparatus as specified in claims 1 to 3. According to a second aspect of the present invention, there is provided an image processing apparatus as specified in claims 4 to 11. According to a third aspect of the present invention, there is provided an imaging method as specified in claim 12. According to a fourth aspect of the present invention, there is provided an image processing method as specified in claim 13. According to a fifth aspect of the present invention, there is provided a computer-readable storage medium as specified in claim 14.

Further features of the present invention will become apparent from the following description of exemplary embodiments with reference to the attached drawings.

### BRIEF DESCRIPTION OF THE DRAWINGS

Fig. 1 is a block diagram schematically illustrating a configuration of a network camera system.
Fig. 2 is a block diagram schematically illustrating a configuration of a camera.
Fig. 3 is a block diagram schematically illustrating a configuration of a client.
Fig. 4 is a block diagram illustrating a configuration of an image processing unit in detail.
Fig. 5 is a flowchart illustrating an overview of processing executed by the image processing unit.
Fig. 6 is a diagram schematically illustrating a display screen.
Fig. 7 is a graph schematically illustrating a luminance histogram.
Fig. 8 is a graph of a gamma curve schematically illustrating input and output characteristics.
Fig. 9 is a diagram schematically illustrating a map.
Fig. 10 is a graph schematically illustrating an image combination ratio.
Figs. 11A, 11B, and 11C are a diagram schematically illustrating a state where a user has selected an area, a diagram schematically illustrating map information, and a diagram schematically illustrating an area provided to the user based on the user selection and the map information, respectively.
Figs. 12A, 12B, and 12C are diagrams schematically illustrating frames of WDR imaging.
Figs. 13A, 13B, and 13C are diagrams schematically illustrating corrected map information.
Figs. 14A, 14B, 14C, and 14D are diagrams schematically illustrating a high exposure value (EV) frame, a low EV frame, a high EV frame after executing various types of processing, and a combined frame, respectively.
Fig. 15 is a flowchart schematically illustrating processing executed by the network camera system.
Figs. 16A, 16B, 16C, and 16D are diagrams schematically illustrating correspondence between a fisheye image and a map.
Fig. 17 is a block diagram illustrating details of an image processing unit that processes a fisheye image.

### DESCRIPTION OF THE EMBODIMENTS

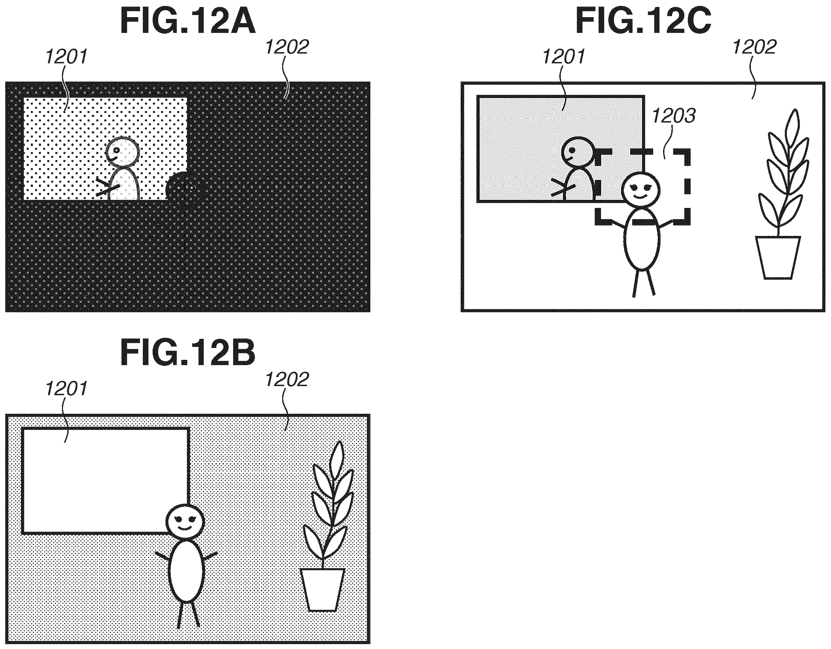

First, difficulty that arises in setting exposure desired by a user when the user specifies an exposure photometry area of a combined image captured in wide dynamic range (WDR) imaging will be described with reference to Figs. 12A, 12B, and 12C. Herein, the WDR imaging refers to processing in which an image having a wide dynamic range is acquired by capturing and combining a plurality of images.

Figs. 12A to 12C are diagrams illustrating a state where a scene of a room having a window is captured through the WDR imaging. In the scene, the outside of the window is brighter than the inside of the room. Fig. 12A is a frame (high-exposure value (EV) frame) captured at an exposure value appropriate for a bright object. Because an area 1201 illustrating a window including the bright outside is captured at an exposure value closer to a correct exposure value than an area 1202 including the inside of the room, the outside of the window is captured brightly, whereas the inside of the room is captured darkly. On the other hand, Fig. 12B is a frame (low-EV frame) captured at an exposure appropriate for a dark object. Therefore, the area 1201 including the outside of the window is overexposed, and the area 1202 including the inside of the room is captured at an exposure value close to a correct exposure value.

A combined frame obtained by combining the two frames to have an expanded dynamic range is illustrated in Fig. 12C. Both of the area 1201 including the outside of the window and the area 1202 including the inside of the room have exposure values closer to the correct exposure values. The original frames of Figs. 12A and 12B used for combining the two frames to expand the dynamic range are usually not provided to the user, and the user is likely to perform operation for making a further adjustment on the image by only looking at the combined frame of Fig. 12C. It is likely that frames of Fig. 12A and 12B are captured so as to enable understanding of content of only a part of a field of view, and it is less meaningful to provide these frames to the user.

However, in Fig. 12C, if the user specifies a rectangle 1203 as a main object for specifying an exposure photometry area, the rectangle 1203 is extended across the bright area 1201 and the dark area 1202. Therefore, even if an exposure detection position is simply specified using the rectangle 1203 on the combined image, it is difficult to know which area from between the bright area 1201 and the dark area 1202 the user would like to specify as an exposure photometry area. For the user, it is difficult to know a boundary between areas on which different image adjustments are executed.

Hereinafter, exemplary embodiments of the present invention will be described in detail with reference to the appended drawings.

Hereinafter, a first exemplary embodiment will be described with reference to the drawings. Herein, a network camera will be described as one exemplary embodiment of the present invention.

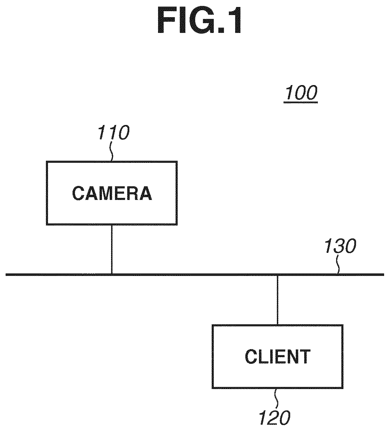

Fig. 1 is a diagram schematically illustrating an example of a configuration of a network camera as an image processing system according to the first exemplary embodiment. As illustrated in Fig. 1, a network camera system 100 includes a network camera (hereinafter, referred to as a camera) 110 as an imaging apparatus, a viewer client (hereinafter, referred to as a client) 120, and a network 130. The camera 110 and the client 120 are communicably connected to each other through the network 130. Note that the imaging apparatus is not limited to the network camera and may also be a portable apparatus of another type having an imaging function such as a digital single-lens reflex camera, a mirrorless single-lens camera, a compact digital camera, a camcorder, a tablet terminal, a personal handy-phone system (PHS), a smartphone, a feature phone, and a handheld game machine.

The camera 110 distributes image data including a captured image via the network 130. The client 120 accesses the camera 110 to execute imaging parameter setting and distribution setting in order to acquire desired image data. Then, the client 120 processes the image data distributed from the camera 110, stores the distributed image data, and processes the stored image data to display an image based on the processed image data.

The network 130 communicably connects the camera 110 and the client 120, and includes a plurality of routers, switches, and cables that satisfy a communication standard such as the Ethernet®. In the present exemplary embodiment, as long as the camera 110 and the client 120 can communicate with each other to distribute images and execute camera setting via the network 130 without any problem, the network 130 may have any communication standard, scale, and configuration. Accordingly, any communication method, e.g., the internet, a wired local area network (LAN), or a wireless LAN may be used as the network 130.

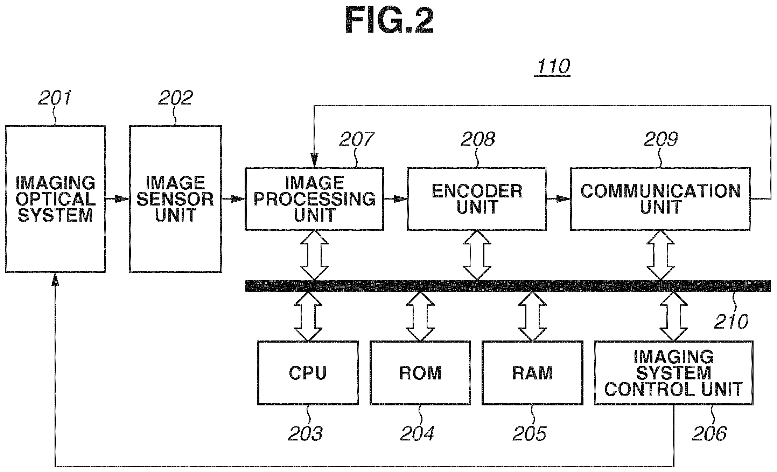

Fig. 2 is a block diagram illustrating a configuration of the camera 110 according to the present exemplary embodiment. An imaging optical system 201 includes an objective lens, a zoom lens, a focus lens, and an optical aperture, and collects light information of an object to an image sensor unit 202 described below. The image sensor unit 202 is a device including a charge-coupled device (CCD) sensor or a complementary metal-oxide semiconductor (CMOS) sensor, and converts light information collected by the imaging optical system 201 into current values. Color information is acquired using a color filter. Basically, the image sensor unit 202 is an image sensor to which an arbitrary exposure time and a gain adjustment can be set for each pixel.

A central processing unit (CPU) 203 engages in processing of each of units connected to a bus 210. For example, the CPU 203 sequentially reads and analyzes an instruction stored in a read only memory (ROM) 204 and a random access memory (RAM) 205 to execute processing according to an analysis result. An imaging system control unit 206 drives a focus lens to adjust focus of the imaging optical system 201, and executes control such as aperture adjustment according to an instruction if the instruction is received from the CPU 203.

More specifically, driving control of the aperture is executed based on an exposure value calculated based on an automatic exposure (AE) function such as program AE, shutter speed priority AE, and aperture priority AE specified by an imaging mode selected by the user.

The CPU 203 also executes an autofocus (AF) control together with an AE control. The AF control may be executed through an active method, a phase difference detection method, and a contrast detection method. A generally-known technique may be employed to a configuration and a control of the above-described AE and AF, so that a detailed description thereof will be omitted.

An image signal digitalized by the image sensor unit 202 is input to an image processing unit 207. The image processing unit 207 executes image processing described below to generate a luminance signal Y and color difference signals Cb and Cr.

An encoder unit 208 executes coding processing for converting the image data processed by the image processing unit 207 into data of a predetermined format such as Joint Photographic Experts Group (JPEG), H.264, and H.265.

A communication unit 209 communicates with the client 120 according to a camera control protocol specified by the Open Network Video Interface Forum (ONVIF), and distributes the captured image data to the client 120 via the network 130. Through the communication using the camera control protocol, the camera 110 receives a camera operation command, a camera setting command, and an inquiry about a function from the client 120, and transmits a response thereto and necessary data other than the image data.

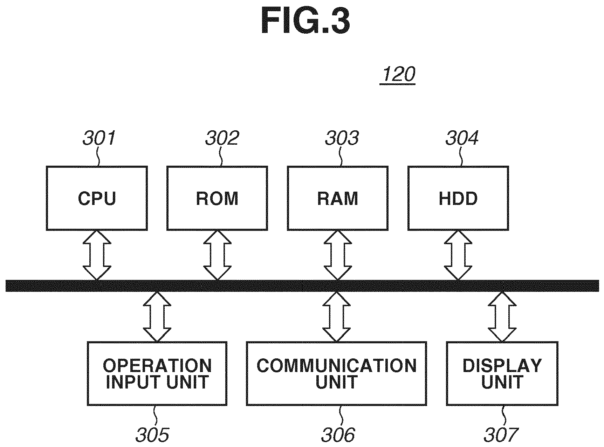

Fig. 3 is a block diagram schematically illustrating a configuration of the client 120 according to the present exemplary embodiment. A CPU 301 integrally controls operations in the client 120. A ROM 302 is a non-volatile memory that stores a control program necessary for the CPU 301 to execute processing. A RAM 303 functions as a main memory and a work area of the CPU 301. In other words, when the processing is executed, the CPU 301 loads a necessary program from the ROM 302 into the RAM 303 and executes the loaded program in order to achieve various functions and operations as well as to execute processing described below.

A hard disk drive (HDD) 304 is a large-capacity secondary storage unit that stores, for example, various types of data, image data, and information necessary for executing processing by the CPU 301. The HDD 304 also stores various types of data, image data, and information acquired by the CPU 301 executing processing using the program.

An operation input unit 305 is an input unit including an operation device (i.e., user interface) such as a power button, a keyboard, and a mouse, and functions as an acceptance unit for accepting various settings (image processing setting and priority setting of each area described below) from the user. A communication unit 306 executes processing for allowing the client 120 to communicate through the network 130. Specifically, the communication unit 306 receives image data captured by the camera 110 via the network 130. Further, the communication unit 306 transmits a camera operation command to the camera 110, and receives a response thereto and necessary data other than the image data.

A display unit 307 includes a graphical user interface (GUI) for inputting various control parameters of the camera 110 (described below in detail) and a display. The display unit 307 may be configured to cause an external display to display the GUI described below. The CPU 301 may execute a program to achieve all or part of functions of each of units of the client 120. However, at least part of the units (i.e., a graphics processing unit (GPU) and a direct memory access (DMA) controller) of the client 120 may be operated separately from the CPU 301 as dedicated hardware. In this case, the dedicated hardware is operated based on the control by the CPU 301.

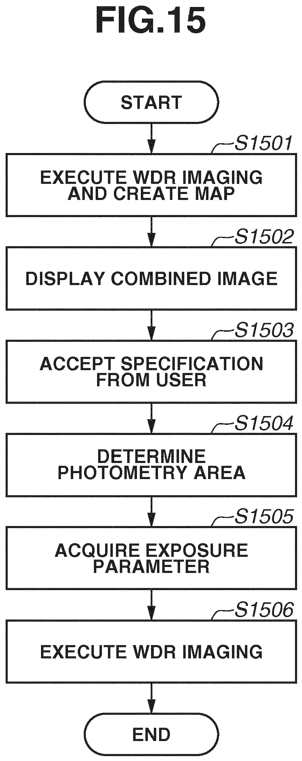

Fig. 15 is a flowchart schematically illustrating processing of the network camera system according to the present exemplary embodiment. In step S1501, the camera 110 executes WDR imaging to acquire a combined image. At this time, if the luminance has two or more peaks, the camera 110 creates a map for identifying areas having different input and output characteristics. The camera 110 transmits the combined image and the created map to the client 120.

In step S1502, the client 120 displays the combined image acquired from the camera 110. The client 120 may also display the map together with the combined image. Then, in step S1503, the client 120 accepts (or receives as an input) a specification of a photometry area from the user. In step S1504, based on the specification of the area received from the user and based on the map, the client 120 determines an area for which an exposure value is acquired and notifies the camera 110 of information about the area. In step S1505, based on the information acquired from the client 120, the camera 110 acquires an exposure parameter and retains the exposure parameter as an imaging setting. Then, in step S1506, the camera 110 executes WDR imaging based on the imaging setting. Details of processing of creating the map, executing the WDR imaging, and determining the area will be described below in detail.

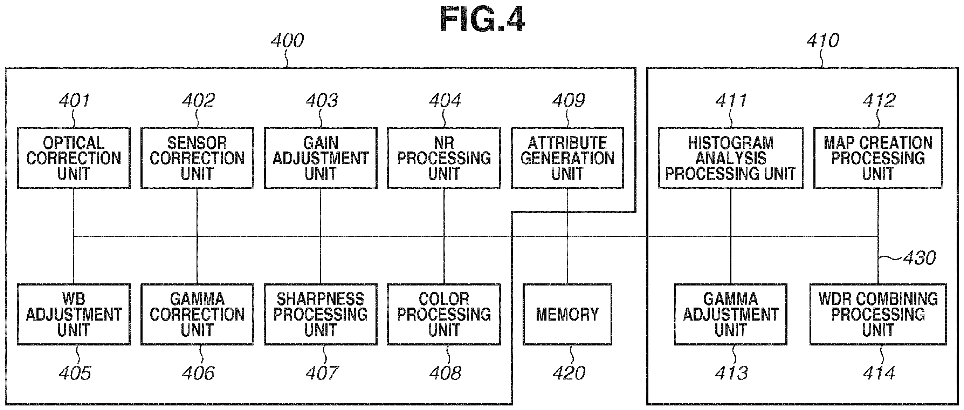

Fig. 4 is a block diagram illustrating details of the configuration of the image processing unit 207 according to the present exemplary embodiment. The image processing unit 207 is broadly divided into two blocks, i.e., a development processing unit 400 and a dynamic range expansion processing unit 410, and is connected to a memory 420 via a local bus 430.

The development processing unit 400 includes an optical correction unit 401 for executing correction of the imaging optical system 201 such as correction of a lens position, a sensor correction unit 402 for executing correction of the image sensor unit 202 such as correction of a sensor, and a gain adjustment unit 403 for executing gain adjustment, with respect to the image data received from the image sensor unit 202. The development processing unit 400 further includes units for executing correction processing of image content, e.g., a noise-reduction (NR) processing unit 404 for executing noise reduction processing, a white-balance (WB) adjustment unit 405 for executing adjustment of white balance, a gamma correction unit 406 for executing gamma correction, a sharpness processing unit 407 for executing sharpness processing, and a color processing unit 408 for executing color processing such as contrast adjustment processing, color saturation adjustment processing, and color conversion processing. An output of the development processing unit 400 is temporarily stored in the memory 420. By storing a plurality of images captured by changing exposure, the plurality of images can be combined with each other by a WDR combining processing unit 414 described below.

The dynamic range expansion processing unit 410 includes a histogram analysis processing unit 411, a map creation processing unit 412, a gamma adjustment unit 413, and the WDR combining processing unit 414 described below. Map information created by the map creation processing unit 412 is also stored in the memory 420. Functional modules included in the dynamic range expansion processing unit 410 will be described below.

In order to change the content of image processing based on a luminance value of a pixel and map information created by the map creation processing unit 412, an attribute generation unit 409 outputs attribute information to each of the units of the image processing unit 207 (development processing unit 400). Each of the units is configured to be capable of referring to the attribute information output from the attribute generation unit 409 to change a processing parameter used for processing the image data.

For example, a luminance threshold value Y^{th} is set to the attribute generation unit 409. Then, the attribute generation unit 409 compares a luminance value with the luminance threshold value Y^{th} for each processing pixel, and adds, to luminance information of the pixel, information indicating whether the luminance value is larger than the luminance threshold value Y^{th} as the attribute information. For example, the attribute information may be a Boolean value that retains "1" if the luminance value of the pixel is larger than the threshold value Y^{th}, and retains "0" if the luminance value thereof is smaller than the threshold value Y^{th}. The optical correction unit 401 to the color processing unit 408 are units that refer to the attribute information to set a processing parameter corresponding to the attribute information.

The attribute information can be similarly added according to the map information described below corresponding to a pixel position created by the map creation processing unit 412. By adding a different attribute according to the position, the processing parameter of each of the units of the image processing unit 207 can be changed.

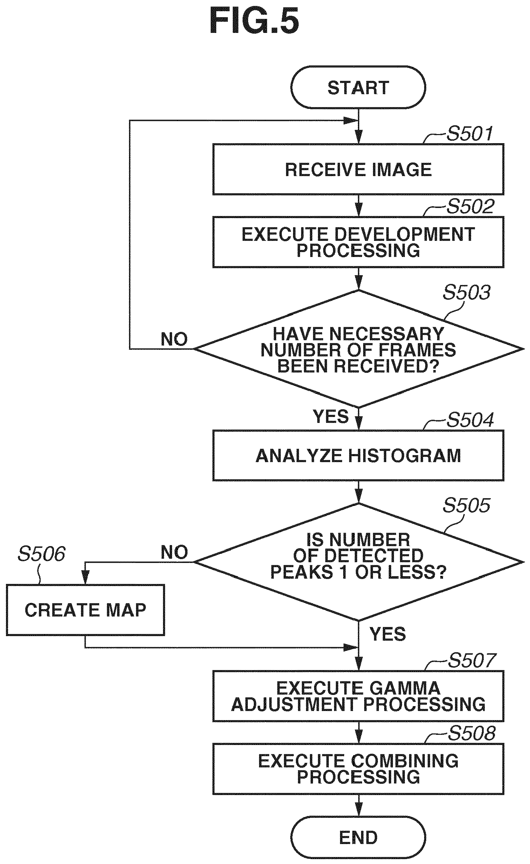

An operation flow of the image processing unit 207 will be described with reference to Fig. 5. In the present exemplary embodiment, two frames in different exposures, i.e., a frame captured by adjusting the exposure to a bright object (hereinafter, referred to as a high-EV frame) and a frame captured by adjusting the exposure to a dark object (hereinafter, referred to as a low-EV frame), are acquired. Then, the image processing unit 207 executes a histogram analysis on the high-EV frame to execute development processing and gamma adjustment processing, and combines each of the frames to output a combined frame. Needless to say, frames may be combined by capturing three or more images in different exposures. Further, in the present exemplary embodiment, processing of combining the entire imaging area is described; however, part of the imaging area in each of the frames may be combined. Further, the histogram analysis may be executed on the low-EV frame, or the histogram analysis may be executed on both of the high-EV frame and the low-EV frame.

In step S501, the image processing unit 207 receives image data from the image sensor unit 202. In step S502, each of the units of the development processing unit 400 executes various types of processing on the received image data.

In step S503, the image processing unit 207 determines whether the image data for the number of frames necessary for combining the images has been received and developed. In the present exemplary embodiment, two images in different exposures are captured. In order to change the exposure, a shutter speed of the image sensor unit 202 may be changed or a gain of the image sensor unit 202 may be changed. Needless to say, both of the shutter speed and the gain may be changed as well. The gain can also be changed by the gain adjustment unit 403. If the above change is made by the image sensor unit 202, the exposure is changed for each captured image before executing WDR combining processing. On the other hand, the gain adjustment unit 403 changes the gain according to the attribute generated by the attribute generation unit 409. Therefore, it is possible to make an adjustment for each area created through the map creation processing in addition to making an adjustment for each captured image before the WDR combining processing.

If the number of frames necessary for the combining processing has been received (YES in step S503), the processing proceeds to step S504. If the necessary number of frames has not been received (NO in step S503), the processing returns to step S501, and the image processing unit 207 receives the image again.

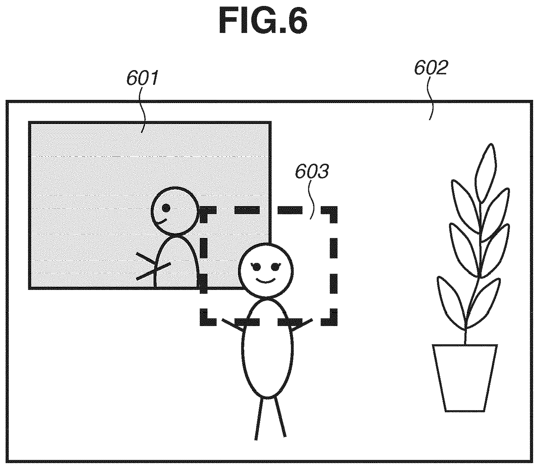

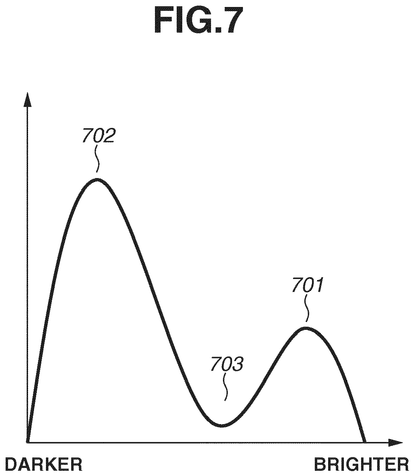

In step S504, the histogram analysis processing unit 411 executes the histogram analysis. The histogram will be described with reference to Fig. 6. Fig. 6 illustrates a UI that displays one example of an imaging scene, and a captured image of an area including the outside of a window 601 expressed as a shaded area and the inside of a room 602 is displayed thereon. It is assumed that the outside of the window 601 and the inside of the room 602 are influenced by different light sources and that there is a large difference in luminance values of an image area of the window 601 and an image area of the room 602. As illustrated in Fig. 7, if the scene has the above-described luminance difference, a histogram is constituted of a histogram having a peak 702 corresponding to the room 602 and a histogram having a peak 701 corresponding to the window 601 with a valley 703 therebetween.

In step S504, the histogram analysis processing unit 411 generates a histogram of a luminance value of each pixel from the image data, and detects whether the number of peaks in the generated histogram is one or two. Depending on the number of peaks detected as an analysis result, the processing is branched at step S505.

If the number of detected peaks is one or less (YES in step S505), the processing proceeds to step S507. In step S507, gamma adjustment processing described below is executed, and the processing of the image processing unit 207 is ended. If the detected number of peaks is two (NO in step S505), the processing proceeds to step S506. In step S506, map creation processing is executed. Further, if there are two peaks, the histogram analysis processing unit 411 sets a luminance value of the valley 703 between the peaks to the attribute generation unit 409. Three or more peaks may also be detected, and the area may be divided by the number corresponding to the number of detected peaks. If the number of included pixels is small (i.e., a size of the area where the peak belongs is small), the peak may also be ignored.

In step S506, the map creation processing unit 412 creates a map. The map is information for illustrating, on the image, to which peak an area belongs from among the two peaks in the histogram in the image in which two peaks are detected. First, the map creation processing unit 412 divides the image into a plurality of luminance areas. In the present exemplary embodiment, a processing image having a resolution of 1920 × 1080 is divided into blocks 603 of 64 × 36. The map creation processing unit 412 classifies the blocks 603 into one block 603 in which more than two-third of pixels within the block have luminance values larger than the luminance value of the valley 703 of the histogram, and another block 603 other than the one block 603, and indicates them in a map.

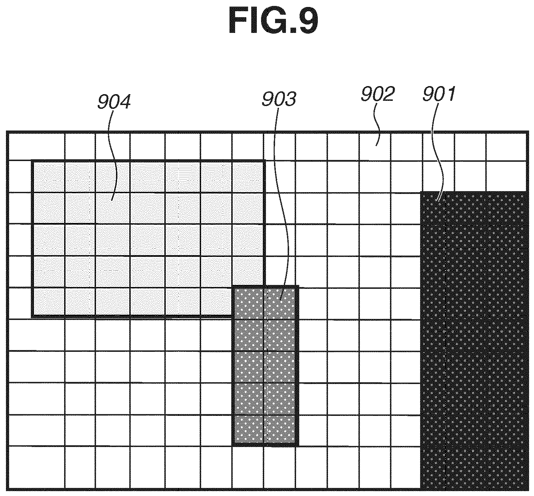

Herein, a map created from the captured image in Fig. 6 is illustrated in Fig. 9, and the map will be described with reference to Fig. 9. In the present exemplary embodiment, because it is assumed that two frames in different exposures are combined with each other, the map is created according to a combination ratio of a plurality of images. Specifically, the map includes four categories of areas, i.e., an area 901 where a low-EV frame ratio is 100%, a mixed area 902 of the low-EV frame and a high-EV frame, an area 903 where the high-EV frame ratio is 100%, and an area 904 where the high-EV frame ratio is 100% and where a plurality of peaks is detected and having different gamma characteristics, in order of increasing the luminance. Needless to say, the map may be created with respect to two categories of the high-EV frame and the low-EV frame.

The high-EV and the low-EV frames will be further described with reference to Figs. 12A, 12B, and 12C. A frame (high-EV frame) captured by adjusting an exposure value to a bright object is illustrated in Fig. 12A. The bright outside of the room is captured at a correct exposure value, but the inside of the room where it is dark is blackened and has no gradation so that visibility thereof is lowered. On the other hand, a frame (low-EV frame) captured by adjusting an exposure value to a dark object is illustrated in Fig. 12B. In the low-EV frame in Fig. 12B, although the window that is bright outside is overexposed, an exposure value closer to a correct value can be acquired for the room where it is dark inside.

This map information (first information) and the number of peaks detected in step S505 are notified to the client 120 from the communication unit 209 of the camera 110.

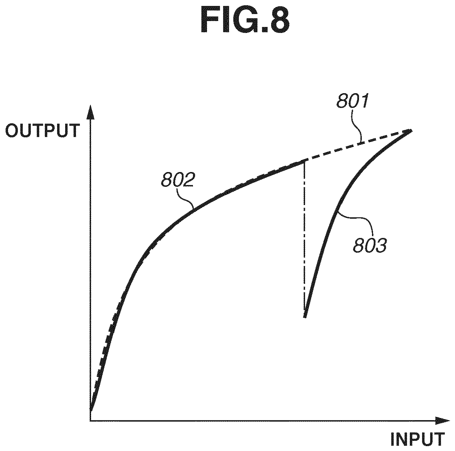

Subsequently, the gamma adjustment processing in step S507 will be described. Fig. 8 is a graph schematically illustrating a gamma curve (a curve illustrating a relationship between input and output) corresponding to the scene illustrated in Fig. 6. If only one peak is detected (or WDR imaging setting is turned off), and the map processing is not executed, gamma for making an adjustment is expressed as a gamma curve indicated by a dashed line 801 in Fig. 8. On the other hand, if the map is created, the gamma for making an adjustment is expressed as discontinuous curves indicated by solid lines 802 and 803 in Fig. 8. An adjustment has been made to lower brightness of an area brighter than that of the valley 703 in Fig. 7 so that a general dynamic range can be ensured. The output value is lowered at a luminance value corresponding to the valley 703 so that visibility of a bright area is improved by executing luminance adjustment using the above-described gamma curve, and the dynamic range is expanded.

In the bright area 601 illustrated in Fig. 6, unless the user specifies an exposure detection area 603, a gamma curve is adjusted as expressed by the dashed line 801 so that an average luminance value of the entire area 601 becomes a preset average luminance value. Details of the exposure detection area 603 will be described below.

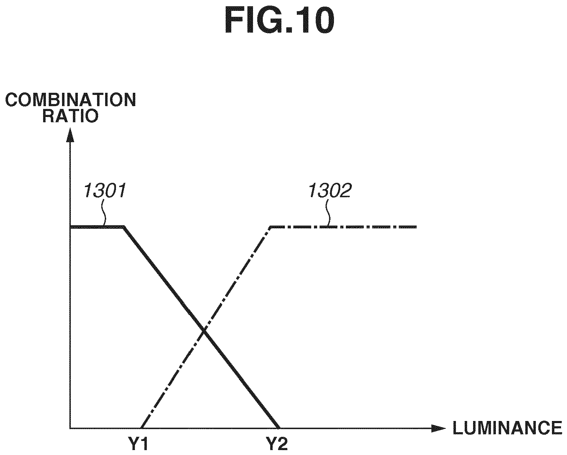

In step S508, the WDR combining processing unit 414 executes combining processing of an image of the high-EV frame after gamma adjustment and an image of the low-EV frame. An overview of the combining processing will be described with reference to Fig. 10. A horizontal axis represents a reference luminance, and a vertical axis represents a combination ratio for additively combining the images. The combination ratio indicated by a solid line 1301 represents a combination ratio of the low-EV frame relative to the reference luminance, and the combination ratio indicated by a dashed-dotted line 1302 represents a combination ratio of the high-EV frame relative to the reference luminance.

When the combining processing is executed, only the low-EV frame is used in an area darker than a threshold value Y1 of the reference luminance, and only the high-EV frame is used in an area brighter than a threshold value Y2 of the reference luminance. By gradually changing the combination ratio in an intermediate area between the threshold values Y1 and Y2 of the reference luminance, images can be switched smoothly. In the present exemplary embodiment, the high-EV frame is used as the reference luminance. The combining processing is ended as described above.

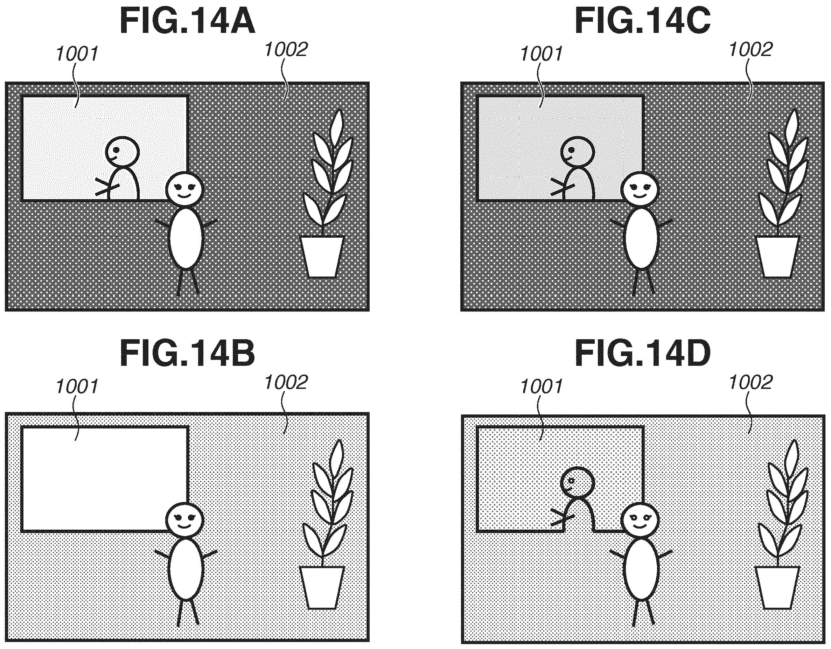

An overview of the processing result will be described with reference to Figs. 14A, 14B, 14C, and 14D. An image (high-EV frame after making a gamma adjustment) acquired by executing histogram analysis, development processing, and gamma adjustment processing in Fig. 5 on the image (high-EV frame) captured by adjusting the exposure value to a bright object in Fig. 14A is illustrated in Fig. 14C. By executing the gamma adjustment, luminance of the bright area (the outside of the window) is lowered and becomes an appropriate luminance. As illustrated in Fig. 14D, by combining the frames in Figs. 14B and 14C at a ratio illustrated in Fig. 10 through the WDR combining processing unit 414, areas ranging from the bright area to the dark area can be captured in the image having a wide dynamic range.

Subsequently, processing executed by the client 120 will be described. The client 120 displays a moving image distributed from the camera 110 so that the user can perform setting (exposure setting) relating to imaging operation or setting relating to the network on the camera 110 while looking at the captured image.

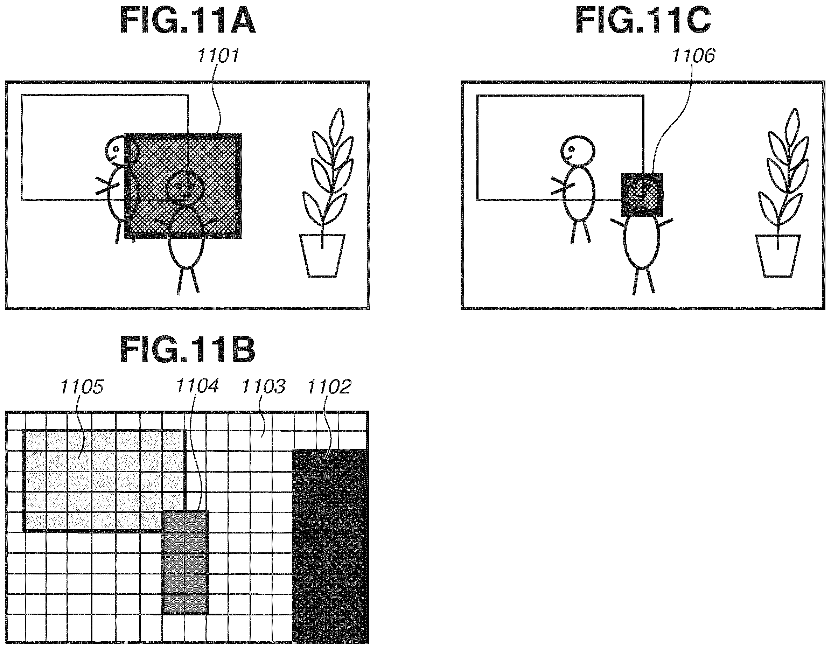

Herein, setting of the exposure detection area performed by the user will be described. An image illustrated in Fig. 11A is displayed on the display unit 307 of the client 120. It is assumed that the user sets an area 1101 as the exposure detection area.

Fig. 11B is a diagram schematically illustrating the map information received by the client 120 from the camera 110. The map information illustrates four areas 1102, 1103, 1104, and 1105.

In the present exemplary embodiment, from among the plurality of areas illustrated in the map information, an area to which the center of the user-specified area 1101 belongs is selected, and an area where that selected area and the user-specified area overlap with each other is provided to the user. In the example illustrated in Figs. 11A to 11C, because the center of the user-specified area 1101 corresponds to the area 1104, an overlapping area (i.e., area 1106 in Fig. 11C) of the areas 1101 and 1104 is displayed to the user. The user can visually recognize the area 1106 to check whether the area 1106 is an intended main object. If the area 1106 is not the intended main object, the user can specify another area again. If the area 1106 is the intended main object, the user determines the setting of the exposure detection area and ends the selection processing.

Exposure detection area information (second information) set by the client 120 is notified to the camera 110 from the communication unit 306 of the client 120. The camera 110 sets the exposure detection area (photometry area) based on the received area information, acquires an exposure setting (exposure parameter) based on a pixel value (e.g., a maximum luminance value or an average luminance value) acquired from the exposure detection area, and executes the subsequent imaging processing. For example, if the exposure detection area is an area where only the low-EV frame is used, the exposure is adjusted for only the low-EV frame. If the exposure detection area is a combined area of the low-EV frame and the high-EV frame, the exposure is adjusted for both of the low-EV frame and the high-EV frame. Furthermore, the exposure is adjusted for only the high-EV frame if the exposure detection area is an area where only the high-EV frame is used, and if the exposure detection area is a gamma-adjusted luminance area in the high-EV frame, the exposure is adjusted for only the corresponding luminance area. The content of the above-described processing is set to each of the units through the attribute generation unit 409.

Needless to say, the gain may be adjusted for each area of the map by executing a gain adjustment through the gain adjustment unit 403. Through the above-described processing, because the exposure setting can be executed on an area intended by the user, it is possible to output an image intended by the user.

A second exemplary embodiment will be described with reference to the appended drawings. In the present exemplary embodiment, an exemplary embodiment in which an omnidirectional lens is used as an optical system of the network camera will be described. The same reference numerals are applied to the configurations or the processing steps having the functions similar to the functions described in the first exemplary embodiment, and descriptions thereof will be omitted for the configurations and the processing steps that are not changed in terms of constitution or functions.

The imaging apparatus according to the present exemplary embodiment is different in that the omnidirectional lens is used as the imaging optical system 201. Therefore, an image processing unit 207 includes a unit for converting a projection method of the omnidirectional lens.

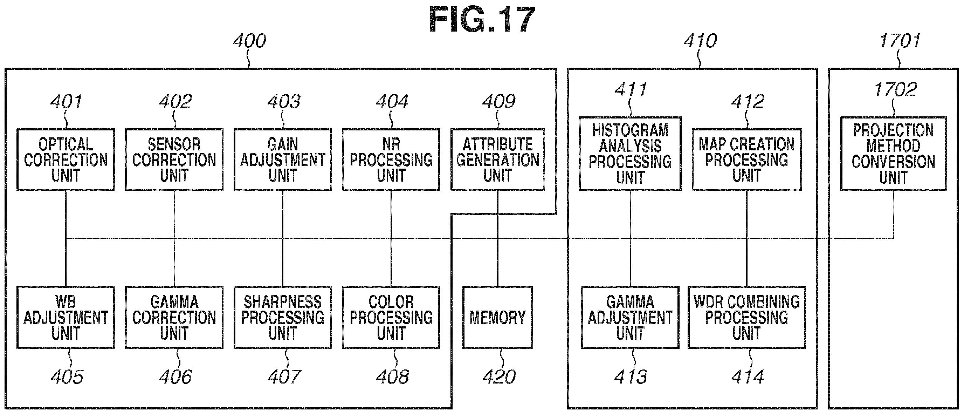

A configuration of the image processing unit 207 is illustrated in Fig. 17. Configurations of the development processing unit 400 and the dynamic range expansion processing unit 410 are similar to those described in the first exemplary embodiment, and thus a description thereof will be omitted. In the present exemplary embodiment, the image processing unit 207 includes a dewarp processing unit 1701. The dewarp processing unit 1701 includes a projection method conversion unit 1702.

When the omnidirectional lens is used, although an image of a wide range in a periphery of the imaging apparatus can be acquired, the image is warped considerably and is not suitable for browsing by a human or specification of an area. Therefore, a projection method is converted for part of the area in the omnidirectional image by the projection method conversion unit 1702. The projection method conversion unit 1702 assumes a plane existing in a specified line-of-sight direction, and projects the omnidirectional image on the assumed plane to acquire a perspective projection image.

The processing is executed on the image that is processed by the development processing unit 400 and the dynamic range expansion processing unit 410 and that is retained in the memory 420. Therefore, the image processing unit 207 is configured to be capable of retaining both of the omnidirectional image and the image processed by the projection method conversion unit 1702 in the memory 420 as well as of creating the projection conversion images of a plurality of portions.

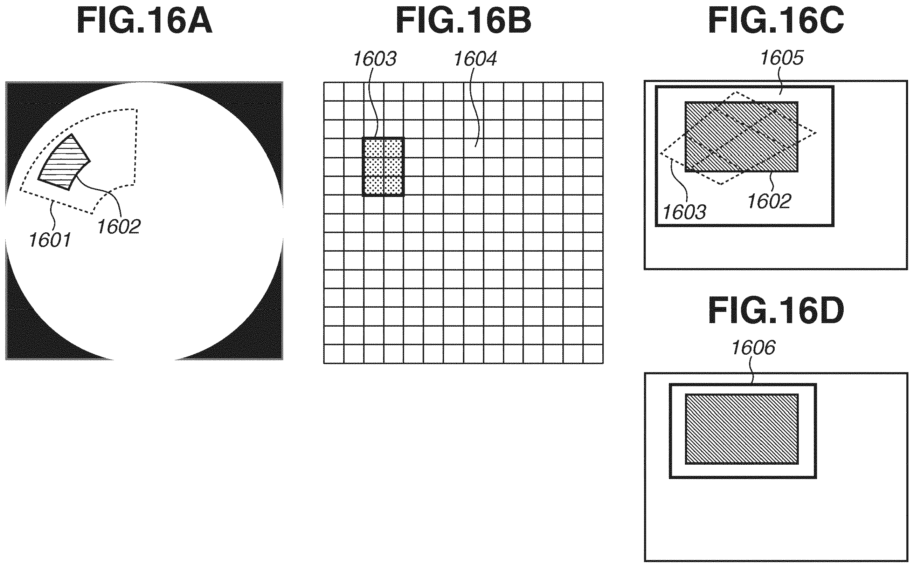

Setting of an exposure detection area executed by a user will be described. Fig. 16A is a diagram illustrating an image captured by the omnidirectional lens. Herein, the captured image of a room including a window 1602 as an object is described as an example. Through projection of the omnidirectional lens, the window 1602 is captured in a fan shape instead of a rectangular shape.

Fig. 16B is a diagram schematically illustrating map information that the client 120 has received from the camera 110. The map information illustrates two areas 1603 and 1604. The area 1603 represents a bright area including a window, and the area 1604 represents a relatively dark area in the room. The map information is created based on the omnidirectional image because the processing is executed prior to the processing executed by the dewarp processing unit 1701.

On the other hand, the user refers to image display illustrated in Fig. 16C. Because perspective projection conversion is executed, the window 1602 has a rectangular shape. Then, the user specifies an area 1605 as a photometry area.

When the client 120 determines the photometry area in step S1504 described above, similar to the first exemplary embodiment, the client 120 selects the area 1603 to which the center of the user-specified area 1605 belongs, and provides an area where the selected area and the user-specified area 1605 overlap with each other to the user.

Herein, the bright area 1603 in the map area is plotted with a dashed line on the image after the perspective projection conversion illustrated in Fig. 16C. Each of the blocks is deformed because of the perspective projection conversion.

In the present exemplary embodiment, among the plurality of areas illustrated in the map information, a rectangular area 1606 circumscribing blocks inside the user-specified area 1605 and corresponding to the area 1603 to which the center of the user-specified area 1605 belongs is provided to the user.

As it is sufficient for the user to be notified that the area selected by the user has been changed and approximated to a processing area, the area to be provided to the user is not limited to the circumscribed rectangular area. For example, the rectangle 1603 according to the map information may be displayed or an area slightly smaller than the circumscribed rectangle may be displayed.

By determining the photometry area as described above and displaying the photometry area to the user, the user can recognize the photometry area more precisely, and an area intended by the user can be set as the actual photometry area.

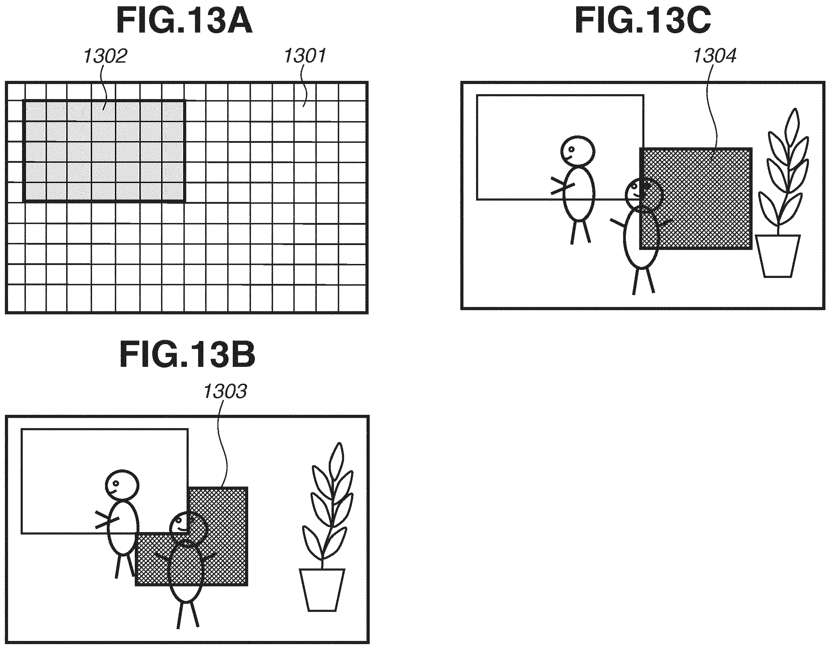

In the first exemplary embodiment, a rectangular shape set by the user is adjusted with respect to an area that includes the center of the exposure detection area specified by the user. As another exemplary embodiment, the map information may be corrected based on an area having different input and output characteristics and an area other than that area. Map information correcting the example illustrated in Figs. 11A to 11C is illustrated in Fig. 13A. Herein, similar to the first exemplary embodiment, if the user specifies the rectangle 1101 illustrated in Fig. 11A, and the area is cut out with a map area that includes a center of the specified rectangle 1101, the exposure detection area should be an area 1303 illustrated in Fig. 13B.

Instead of cutting out the area, an exposure detection frame may be moved away from the map area having different input and output characteristics. For example, in a case of the example illustrated in Figs. 13A to 13C, the exposure detection frame can be moved to a position as illustrated by an area 1304 in Fig. 13C through a moving method that keeps the central position closer to the central position compared to before moving the exposure detection frame when the exposure detection frame is moved so as not to overlap the map area having different input and output characteristics.

Further, the map area may be provided to the user, and if a rectangle set by the user is extended across a plurality of areas, the user may be notified of a state that the rectangle is extended across the plurality of areas and may be prompted to select the area again. The notification may be provided as a message or a highlighted display in which both of the overlapping areas are blinked or displayed in different colors. A rectangle having a maximum area and that is not extended across a plurality of areas may be automatically set among rectangles specified by the user.

A plurality of areas illustrated in the map information may be provided to the user to allow the user to select an area to be an exposure reference. For convenience of description, processing of creating a map for two areas has been mainly described in the above-described exemplary embodiments; however, the present invention is similarly applicable to processing of creating a map for three or more areas.

The present invention can also be achieved by executing the following processing. Software (program) for achieving the function of the above-described exemplary embodiments is supplied to a system or an apparatus via a network or various storage media, and a computer (or a CPU or a micro processing unit (MPU)) of the system or the apparatus reads and executes the program.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An imaging apparatus (110) comprising:
imaging means configured to capture an image;
combining means configured to combine a plurality of images and configured to output a combined image;
notification means configured to notify an image processing apparatus of first information that indicates a plurality of areas in the combined image that have input and output characteristics different from each other; and
receiving means configured to receive, from the image processing apparatus, second information that indicates a detection area,
wherein the imaging means is further configured to set an exposure value based on the detection area indicated by the second information.

2. The imaging apparatus according to claim 1, wherein the imaging means captures a plurality of images in different exposure settings, and the combining means outputs a combined image having a dynamic range expanded based on the plurality of images.

3. The imaging apparatus according to claim 1 or 2, wherein the imaging means captures an image based on an exposure value set based on a luminance value acquired from a detection area indicated by the second information.

4. An image processing apparatus (120) comprising:
acquisition means configured to acquire, from an imaging apparatus, an image and first information that indicates a plurality of areas of the image that have input and output characteristics different from each other;
display means configured to display the image and the plurality of areas acquired by the acquisition means; and
receiving means configured to receive specification of an area of the image displayed by the display means from which an exposure value of the imaging apparatus is to be set.

5. The image processing apparatus according to claim 4, further comprising a user interface to allow a user to set a detection area.

6. The image processing apparatus according to claim 4 or 5, further comprising:
determination means configured to determine a detection area to which an exposure value of the imaging apparatus is to be set based on the specification of an area received by the receiving means and the first information acquired by the acquisition means; and
transmission means configured to transmit second information including the detection area to the imaging apparatus.

7. The image processing apparatus according to claim 6, wherein the determination means is further configured to determine an area where an area including a central position of an area received by the receiving means overlaps an area received by the receiving means as a detection area from among the plurality of areas indicated by the first information.

8. The image processing apparatus according to any one of claims 6 and 7, wherein the display means displays the area determined as the detection area by the determination means.

9. The image processing apparatus according to any one of claims 4 to 8, wherein, if the area received by the receiving means is extended across a plurality of areas indicated by the first information, the display means displays a notification indicating that the area is extended across the plurality of areas.

10. The image processing apparatus according to any one of claims 4 to 9, wherein the areas having the input and output characteristics different from each other are areas to which discontinuous curved lines are set as curved lines indicating a relationship between an input and an output.

11. The image processing apparatus according to any one of claims 4 to 9, wherein the areas having the input and output characteristics different from each other are areas having exposure settings different from each other.

12. An imaging method executed by an imaging apparatus for capturing an image, the method comprising:
capturing an image;
combining a plurality of images and outputting a combined image;
notifying an image processing apparatus of first information indicating a plurality of areas of the combined image that have input and output characteristics different from each other; and
receiving, from the image processing apparatus, second information that indicates a detection area,
wherein an exposure value is set based on the detection area indicated by the received second information.

13. An image processing method comprising:
acquiring, from an imaging apparatus, an image and first information that indicates a plurality of areas of the image that have input and output characteristics different from each other;
displaying the acquired image and the acquired plurality of areas that have input and output characteristics different from each other; and
receiving specification of an area of the image from which an exposure value of the imaging apparatus is to be set.

14. A non-transitory computer-readable storage medium comprising instructions which, when executed by a computer, cause the computer to carry out the method of claim 13.
